# EUROPEAN PATENT SPECIFICATION

(11) **EP 4 212 444 B1**
(45) Date of publication and mention of the grant of the patent: **01.05.2024**
(21) Application number: 22213484.3
(22) Date of filing: 14.12.2022
(51) Int. Cl.: B65D 1/26, B65D 25/42

(54) **CONTAINER FOR A VISCOUS FOOD PRODUCT**
BEHÄLTER FÜR EIN VISKOSES LEBENSMITTELPRODUKT
RÉCIPIENT POUR PRODUIT ALIMENTAIRE VISQUEUX

(30) Priority: 03.01.2022 GB 202200013
(43) Date of publication of application: 19.07.2023
(73) Proprietor: Donworth Capital Limited, D18A7K6 Dublin (IE)
(72) Inventor: MURPHY, Donagh, Dublin, D18A7K6 (IE); CASEY, John, Dublin, D18A7K6 (IE)
(74) Representative: FRKelly

(56) References cited:
- US-A- 5 645 191
- US-A- 6 079 588

## Description

### FIELD OF THE INVENTION

This invention relates to a container for a viscous food product and in particular to a ready to serve container within which a relatively viscous food product, such as soup, can be supplied whereby the food product can be consumed directly from the container.

### BACKGROUND OF THE INVENTION

It is well known to provide disposable cups within which a hot beverage, such as coffee, can be served, the container being provided with a plastic lid for resisting spillages, the lid typically having a small opening through which the beverage can be drunk while the lid remains attached to the cup. It is also known to provide sealed beverage containers within which a beverage can be supplied to a point of sale, such containers having a seal which can be removed or pierced to allow the contents to be drunk, typically by means of a plastic straw used to pierce the seal. US5645191 discloses another type of beverage container, which consists in a cup provided with a spout extending upwardly from its rim, the cup and spout being closed by a lid having an openable portion located at the tip of the spout.

However, known disposable beverage containers are not suitable for serving more a viscous food product, such as soup, due to the small size of the opening in the lid and the difficulty of drinking a more viscous food product though such an opening without spillage. Furthermore, serving such viscous products into a disposable cup at the point of sale from a suitable dispenser can be difficult and can lead to cleaning and sanitation problems.

Therefore, soup and other more viscous products are usually stored in a large container, within which the soup is kept hot, and a consumer self serves the soup from the large container, using a ladle or spoon, into a suitable bowl for consumption therefrom. However, the storage of soup in such large open containers leads to issues with evaporation, changes in flavour, waste, and reduction in organoleptic properties. Margins can be very low and demand is often periodic. Therefore, heating and maintaining the temperature of a large volume of soup in such open containers is inefficient. Furthermore, self service of soup from such large open containers using a ladle or spoon can lead to contamination of the soup and spillages.

It is desirable to provide a food container within which a portion of a viscous food product, such as soup, can be supplied, and optionally heated, before the viscous food product is consumed directly from the container. However, while attempts have been made to provide a solution to this problem, known solutions typically require complete removal of a lid from the container before the contents are poured from the container into a bowl. Alternatively, the contents may be consumed directly from the container using a suitable utensil, such as a spoon, after complete removal of a lid or closure. This requires additional containers and/or implements to be supplied with the soup. Furthermore, it is difficult, if not impossible, to reclose the container should the consumer not want to eat all of the soup at once.

### SUMMARY OF THE INVENTION

The present invention provides a container for a viscous food product, in particular soup, comprising a cup having a rim, a portion of said rim defining an upwardly extending spout to facilitate consumption of said viscous food product from the cup via said spout, a lid adapted to be mounted on the rim of the cup to close the cup, a dispensing aperture being provided in said lid adjacent the spout when the lid is attached to the cup, the lid incorporating a releasable closure adapted to close the dispensing aperture when in a closed configuration, wherein said closure includes a portion adapted to overlie the spout when the lid is attached to the cup and the closure is in its closed configuration.

Preferably the closure is integrally formed with the lid. A tear guide may be formed in the lid at the interface of the closure and the dispensing aperture, wherein the closure can be at least partially separated from the lid by tearing along said tear guide to open said dispensing aperture and release the closure. Said tear guide may comprise a reduced thickness portion of the lid. In one embodiment said tear guide comprises first and second tear guide portions defining respective sides of the dispensing aperture and extending from respective ends of a hinge portion at or adjacent a central region of the lid towards the rim of the cup. Said first and second tear guide portions preferably diverge from one another towards an outer edge of the lid and terminate on either side of the spout of the cup when the lid is attached to the cup. Preferably said closure is adapted to seal the dispensing aperture of the lid prior to separation of the closure from the lid along said tear guide.

Said releasable closure preferably includes a cover portion adapted to fit over said spout of the cup when in its closed configuration. Said cover portion of said releasable closure and said spout of the cup may include cooperating latch members adapted to secure the cover portion over the spout, prior to initial use and to allow subsequent re-closure of the closure such that the closure is reusable. Said cooperating latch members may comprise at least one projection or barb on one of said cover portion and said spout and at least one cooperating recess on the other of said cover portion and said spout adapted to receive said projection or barb when said closure is in its closed configuration. The lid may include a recess adapted to receive said cover portion to thereby retain said closure in its open configuration. Said recess may be adapted to receive a tip of said cover portion of the closure. The cover portion of the lid is preferably located at the outer ends of the first and second tear guides.

The lid may include a mounting ring for mounting the lid onto the rim of the cup. Said mounting ring of the lid and the rim of the cup may include cooperating latch means for securing the lid to the cup. Said cooperating latch means may comprise radially spaced inwardly facing projections or barbs provided on the mounting ring of the lid adapted to be receiving in cooperating recess formed in the rim of the cup.

In a preferred embodiment the rim of the cup may comprise an inner wall and an outer wall and an upper face extending between said inner and outer walls. The rim of the cup may further comprise radially extending reinforcement ribs between said inner and outer walls. The cover portion of the closure preferably extends over both the inner and outer walls of the portion of the rim defining said spout when the closure is in its closed configuration.

The lid may incorporate upwardly projection guide walls adjacent the dispensing opening adapted to prevent spillage on either side of the spout.

Preferably the spout has a radius of curvature less than the radius of the remainder of the rim of the cup.

### BRIEF DESCRIPTION OF THE DRAWINGS

A food container for a viscous food product in accordance with an embodiment of the present invention will now be described, by way of example only, with reference to the accompanying drawings, in which:

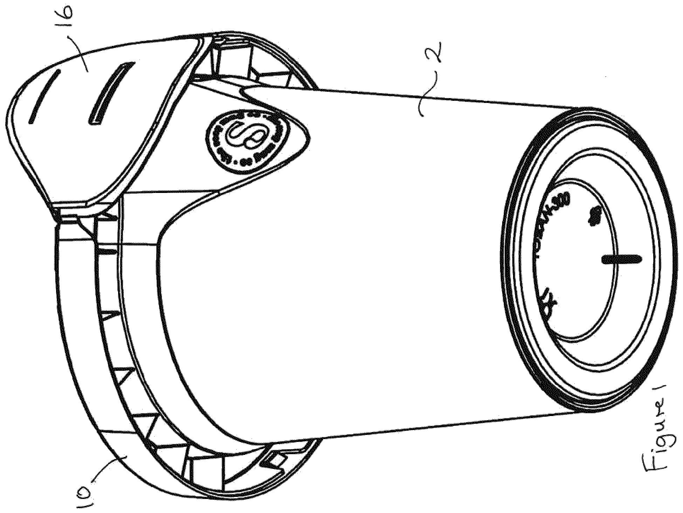

Figure 1 is a perspective view of a food container in accordance with an embodiment of the present invention;

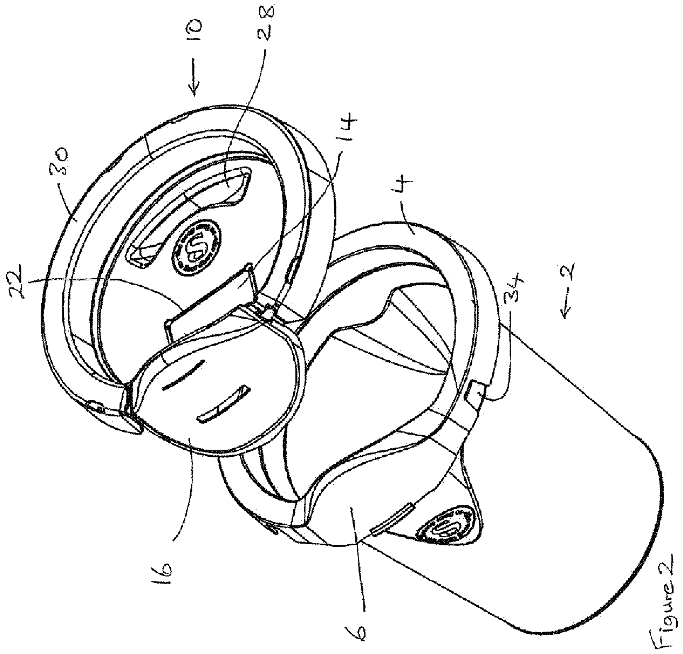

Figure 2 is a perspective view of the food container of Figure 1 with the lid removed;
Figure 3 is a plan view of the food container of Figure 1;

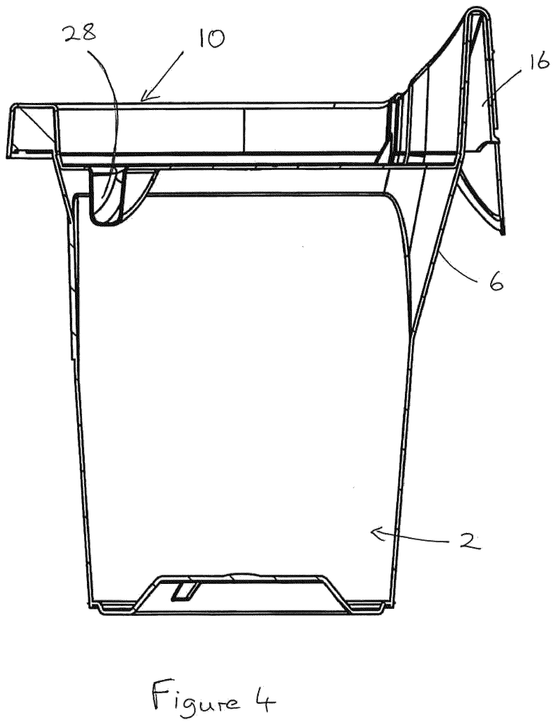

Figure 4 is a sectional view on line B-B of Figure 3;

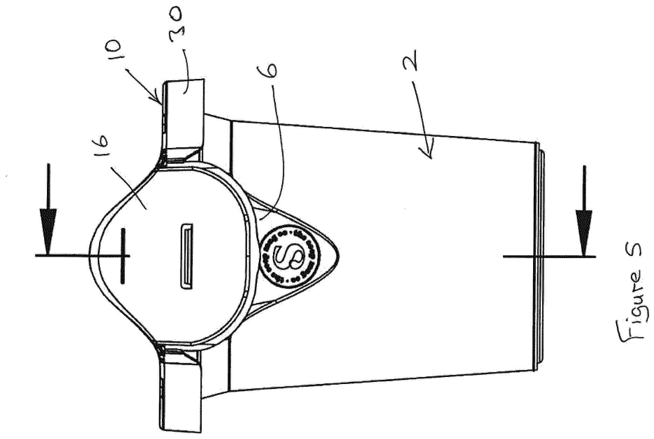

Figure 5 is a front view of the food container of Figure 1 ;

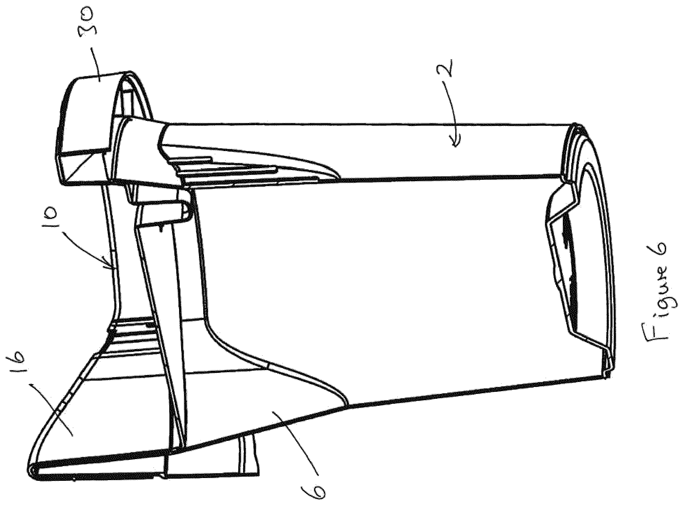

Figure 6 is a sectional view on line C-C of Figure 5;

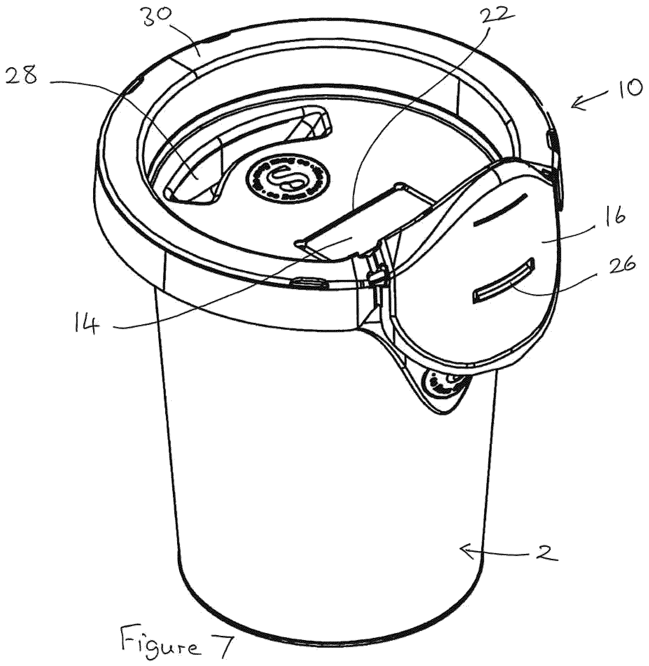

Figure 7 is a further perspective view of the food container of Figure 1;

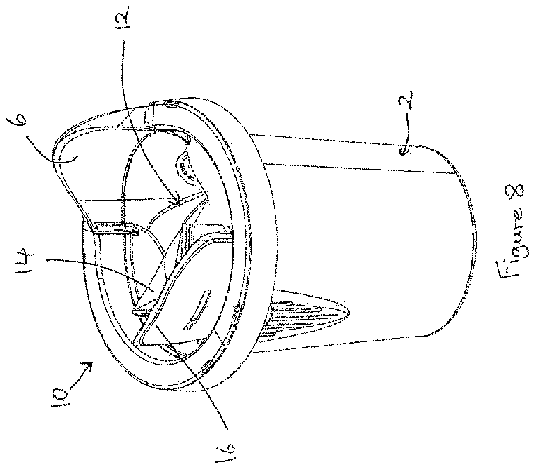

Figures 8 and 9 are perspective views of the food container of Figure 1 with the lid closure in an open configuration;

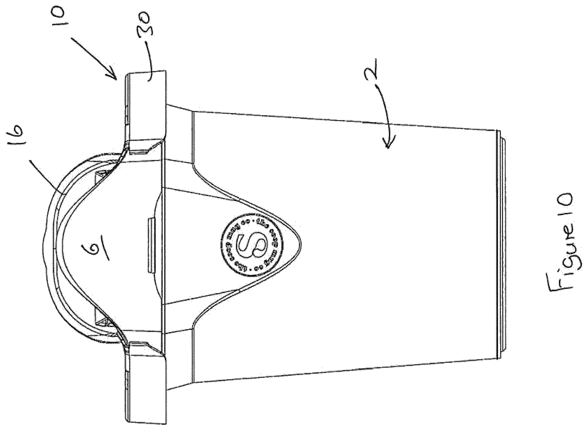

Figure 10 is a front view of the food container of Figure 1 with the lid closure in its open configuration;
Figure 11 is a sectional view on line D-D of Figure 10;

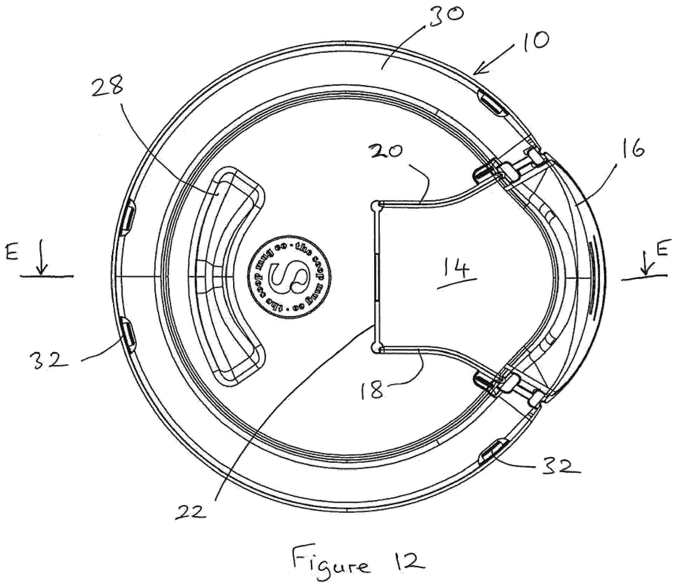

Figure 12 is a plan view of the lid of the food container of Figure 1 from below with the lid closure in its closed configuration;

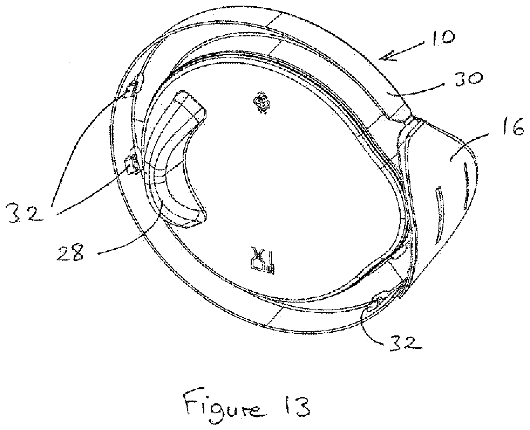

Figure 13 is a perspective view of the lid of the food container of Figure 1 from below;

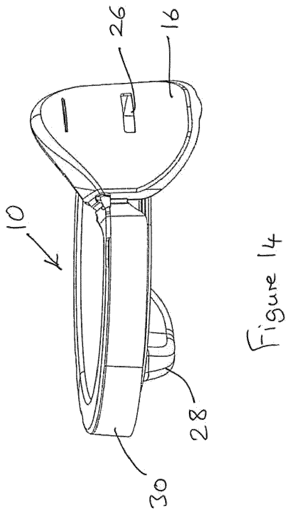

Figure 14 is a further perspective view of the lid of the food container of Figure 1 with the lid closure in its closed configuration;

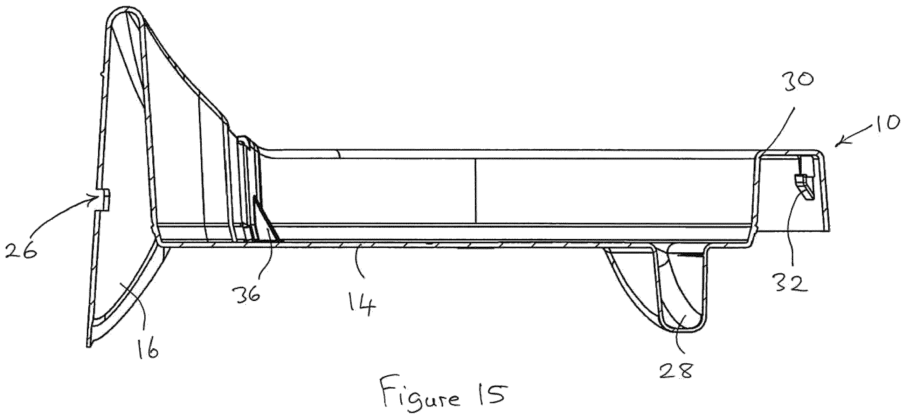

Figure 15 is a sectional view on line E-E of Figure 12;
Figure 16 is a plan view of the lid of the food container of Figure 1 with the lid closure in its closed configuration;
Figure 17 is a sectional view of line F-F of Figure 16; and
Figure 18 is a detailed view of part X of the lid indicated in Figure 17.

### DETAILED DESCRIPTION OF THE DRAWINGS

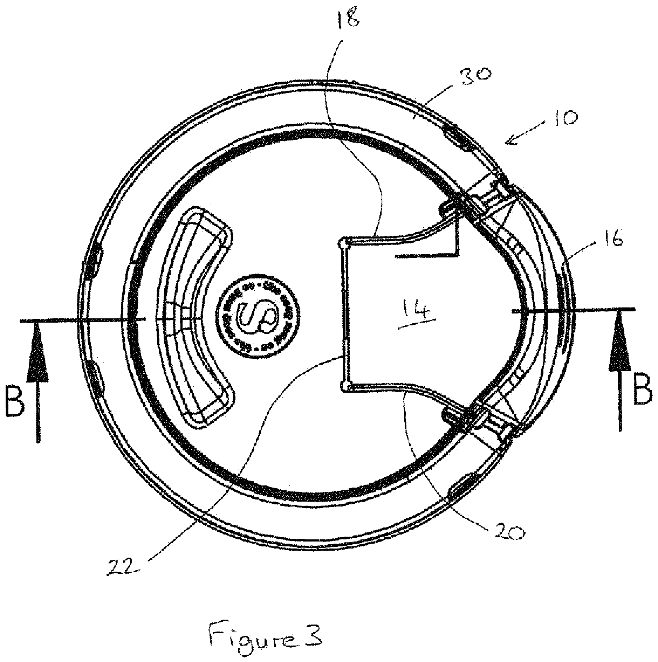

As illustrated in the drawings, a container for holding and serving a viscous food product, in particular soup, in accordance with an embodiment of the present invention comprises a cup 2 having a rim 4, a portion of the rim extending upwardly to define a raised spout 6 for guiding the viscous food product into the consumer's mouth, avoiding the need for the use of a spoon or other eating utensils, the spout having a radius of curvature less than the radius of the lip of the cup 2 and offset from the centre of the cup, as best illustrated in Figure 3, such that it funnels the viscous product into the consumer's mouth without spillage.

A lid 10 is securable to the rim of the cup 2 to close the container, the lid 10 incorporating a large and relatively wide dispensing aperture 12 positioned to be aligned with and adjacent the spout 6 when the lid 10 is attached to the cup 2. The lid 10 incorporates an integrally formed releasable and reusable closure 14 serving to initially close and seal the dispensing aperture 12 to allow the cup 2 and lid 10 when attached thereto to define a sealed container for storing a portion of a viscous food product, such as soup, when the closure 14 is in a closed configuration, and to subsequently allow the dispensing aperture 12 of the lid 10 to be re-closed after initial opening.

The closure 14 of the lid 10 includes an integrally formed cover portion 16 adapted to fit over the spout 6 of the cup 2 when the lid 10 is secured to the rim 4 of the cup 2 and the closure 14 of the lid 10 is in its closed configuration, whereby the cover portion 16 of the closure 14 defines a shroud over the spout 6 to preserve sterility of the spout 6 prior to opening of the closure 14.

The closure 14 is integrally formed with the lid 10 and tear guides 18,20, for example in the form of reduced thickness regions, are formed in the lid 10 at the interface of the closure 14 and the sides of the dispensing aperture 12, whereby the closure 14 can be partially separated from the lid 10 by tearing along said tear guides 18,20 to open said dispensing aperture 12 and release the closure 14 to allow the closure to be moved to an open configuration. In the embodiment shown, first and second tear guide portions 18,20 define respective sides of the dispensing aperture 12 and extend from respective ends of a hinge portion 22 at or adjacent a central region of the lid 10 towards the rim 4 of the cup 2, the hinge portion 22 preferably being defined by a reduced thickness region of the lid 10.

As best shown in Figure 3, the first and second tear guide portions 18,20 comprise substantially parallel first portions extending perpendicular to the hinge portion 22 and outwardly diverging second portions diverging from one another towards an outer edge of the lid 10 and terminating on either side of the cover portion 16 of the lid 10. The sides of the cover portion 16 of the lid may be connected to the remainder of an outer rim of the lid 10 by frangible regions or lines of weakness. As such, the closure 14 is adapted to seal the dispensing aperture 12 of the lid 10 prior to separation of the closure 14 from the remainder of the lid 10 along said tear guides 18,20.

The cover portion 16 of the releasable closure 14 of the lid 10 and the spout 6 of the cup 2 include cooperating latch members adapted to secure said cover portion 16 over the spout 6 of the cup 2 when the lid 10 is attached to the cup 2. In the embodiment shown, the cooperating latch members may comprise a projection 24 on an outer wall of the spout 6 of the cup 2 and a cooperating slot 26 in the cover portion 16 of the lid 10 adapted to receive said projection 24 when the lid 10 is attached to the cup 2 and the closure 14 is in its closed configuration. As well as assisting in retaining the lid 10 onto the cup 2 prior to separation of the closure 14 from the remainder of the lid 10, the cooperating latch members of the cover portion 16 of the closure 14 and the spout 6 of the cup 2 allow the closure 14 to be re-closed after initial opening should the consumer not wish to consume all of the contents of the cup at one time.

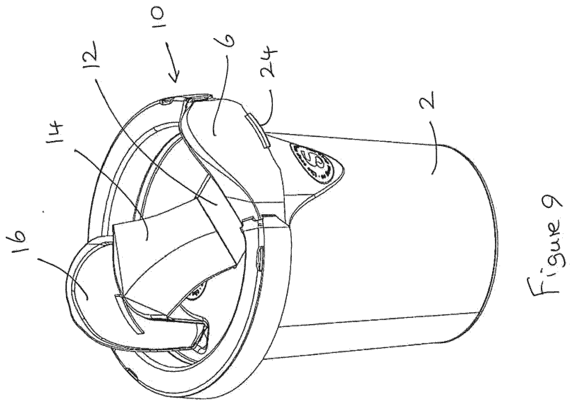

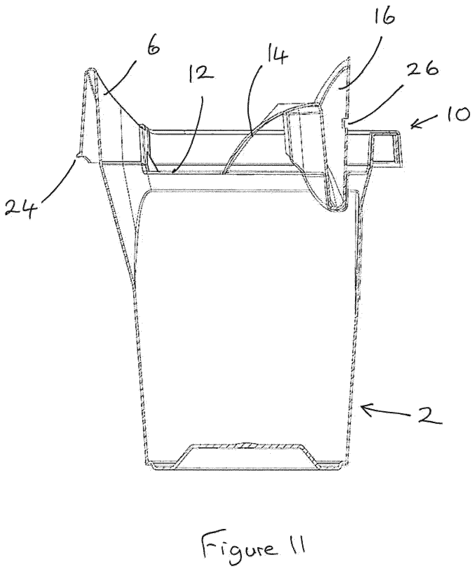

As best shown in Figures 9 and 11, the lid 10 may include a recess 28 adapted to receive the cover portion 16, more preferably a tip of the cover portion 16, to thereby retain the closure 14 in its open configuration when the contents of the cup 2 are being consumed.

The rim of the lid 10 includes a mounting ring 30 for mounting the lid 10 over the rim 4 of the cup 2. The mounting ring 30 of the lid 10 and the rim 4 of the cup 2 include cooperating latch means for securing the lid to the cup. Said cooperating latch means may comprise radially spaced inwardly facing projections or barbs 32 provided on the mounting ring of the lid adapted to be receiving in cooperating recesses 34 formed in the rim 4 of the cup 2.

In the embodiment shown in the drawings the rim 4 of the cup 2 comprises an inner wall and an outer wall and an upper face extending between said inner and outer walls, radially extending reinforcement ribs extending between said inner and outer walls. The cover portion 16 of the closure 14 of the lid 10 extends over both the inner and outer walls of the portion of the rim 4 of the cup 2 defining said spout 6 when the lid 10 is attached to the cup 2 and the closure 14 is in its closed configuration.

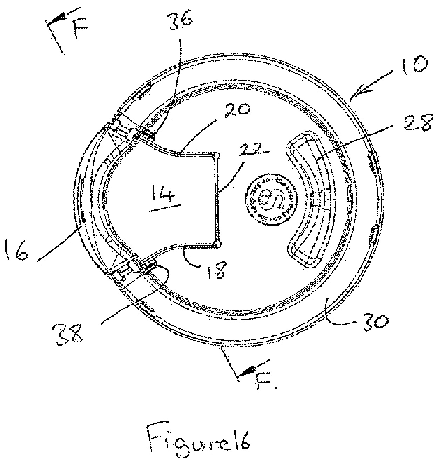

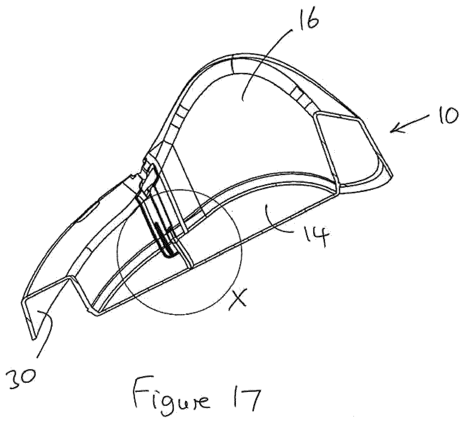

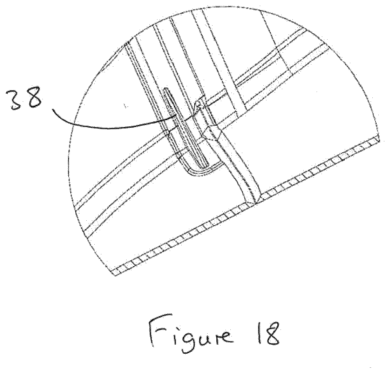

As shown in Figures 16 to 18, the lid 10 may incorporates upwardly projecting guide walls 36,38 adjacent outer sides of the dispensing opening 12 adapted to prevent spillage on either side of the spout 6.

The cup and the lid may be moulded from a suitable heat resistant plastic material.

In use, the built-in spout 6 of the cup 2 funnels the contents of the cup 2 towards the consumer's mouth via the wide and relatively large dispensing aperture 12 in the lid 10. The provision of upstanding guide walls 36,38 on either side of the spout 6 ensures that there is no spillage from sides.

The initially sealed dispensing aperture 12 in the lid 10 ensures that the food product in the container is safe for consumption for 28 days after cooking and sealing. The cover portion 16 of the lid closure 14 is shaped as a shroud to cover and preserve sterility of the spout 6 prior to opening of the closure 14. The tear guides 18,20 are shaped to provide a dispensing aperture 12 that is sufficiently wide for dispensing a high viscosity food product from the container and facilitates passage of the contents of the cup onto the spout 6 and into the consumer's mouth without spillage.

The projection 24 provided on outer wall of the spout 6 for engaging the slot 26 in the cover portion 16 of the closure 14 secures the closure 14 in its closed configuration and allows the container to be re-closed should the consumer not wish to consume all of the contents of the container at once. The ability to re-close the closure 14 provides for safer carrying of the cup when filled with hot contents, for example when carrying from a point of heating, such as a microwave oven, to a point of consumption. The closure 14 may also be partially opened with the slot 26 in the cover portion 16 of the closure 14 engaging an uppermost lip of the spout 6 to partially open the dispensing aperture 12 to thereby define a vent when it is desired to heat the contents of the container.

The lid 10 is adapted to be clipped securely to rim 4 of the cup 2 to ensure that the lid 10 stays in place on the cup 2 during opening of the closure 14.

The invention is not limited to the embodiment described herein but can be amended or modified without departing from the scope of the appended claims.

## Claims

1. A container for a viscous food product comprising a cup (2) having a rim (4), a portion of said rim (4) defining an upwardly extending spout (6) to facilitate consumption of said viscous food product from the cup (2) via said spout (6), a lid (10) adapted to be mounted on the rim (4) of the cup (2) to close the cup (2), **characterised in that** a dispensing aperture (12) is provided in said lid (10) adjacent the spout (6) when the lid (10) is attached to the cup (2), the lid (10) incorporating a releasable closure (14) adapted to close the dispensing aperture (12) when in a closed configuration, wherein said closure (14) includes a portion (16) adapted to overlie the spout (6) when the lid (10) is attached to the cup (2) and the closure (14) is in its closed configuration.

2. A container as claimed in claim 1, wherein the closure (14) is integrally formed with the lid (10).

3. A container as claimed in claim 2, wherein at least one tear guide (18,20) is formed in the lid (10) at the interface of the closure (14) and the dispensing aperture (12), wherein the closure (14) can be at least partially separated from the lid (2) by tearing along said at least one tear guide (18,20) to open said dispensing aperture (12) and release the closure (14).

4. A container as claimed in claim 3, wherein said at least one tear guide (18,20) comprises a reduced thickness portion of the lid.

5. A container as claimed in claim 3 or claim 4, wherein said at least one tear guide comprises first and second tear guide portions (18,20) defining respective sides of the dispensing aperture (12) and extending from respective ends of a hinge portion (22) at or adjacent a central region of the lid (10) towards the rim (4) of the cup (2).

6. A container as claimed in claim 5, wherein said first and second tear guide portions (18,20) diverge from one another towards an outer edge of the lid (10) and terminate on either side of the spout (6) of the cup (2) when the lid (10) is attached to the cup (2).

7. A container as claimed in any of claims 3 to 6, wherein said closure (14) is adapted to seal the dispensing aperture (12) of the lid (10) prior to separation of the closure (14) from the lid (10) along said at least one tear guide (18,20).

8. A container as claimed in any preceding claim, wherein said portion (16) of the lid (10) adapted to overlie the spout (6) of the cup (2) when the lid (10) is attached to the cup (2) comprises a cover portion (16) of said closure (14) adapted to fit over said spout (6) of the cup (2) when in its closed configuration.

9. A container as claimed in claim 8, when dependent up claim 5 or claim 6, wherein said cover portion (16) is located at an outer end of said first and second tear guides (18,20).

10. A container as claimed in claim 8 or claim 9, wherein said cover portion (16) of said closure (14) and said spout (6) of the cup (2) include cooperating latch members adapted to secure said cover portion (16) of said closure (14) over said spout (6), prior to initial use and to allow subsequent re-closure of said closure (14) such that said closure (14) is reusable.

11. A container as claimed in claim 10, wherein said cooperating latch members comprise at least one projection or barb (24) on one of the cover portion (14) and the spout (6) and at least one cooperating recess (26) on the other of the cover portion (14) and the spout (6) adapted to receive said projection or barb (24) when said closure (14) is in its closed configuration.

12. A container as claimed in any of claims 8 to 11, wherein said lid (10) includes a recess (28) adapted to receive said cover portion (16) to thereby retain the closure (14) in its open configuration.

13. A container as claimed in claim 12, wherein said recess (28) is adapted to receive a tip of said cover portion (16) of said closure (14).

14. A container as claimed in any preceding claim, wherein said lid (10) incorporates upwardly projection guide walls (36,38) adjacent the dispensing opening (12) adapted to prevent spillage on either side of said spout (6).

15. A container as claimed in any preceding claim, wherein the spout (6) has a radius of curvature less than the radius of the remainder of the rim (4) of the cup (2).

## Patentansprüche

1. Behälter für ein dickflüssiges Nahrungsmittelprodukt, umfassend einen Becher (2) mit einem Rand (4), wobei ein Abschnitt des Rands (4) eine sich nach oben erstreckende Tülle (6) definiert, um den Verzehr des dickflüssigen Nahrungsmittelprodukts aus dem Becher (2) über die Tülle (6) zu erleichtern, einen Deckel (10), der dazu angepasst ist, an dem Rand (4) des Bechers (2) befestigt zu werden, um den Becher (2) zu verschließen, **dadurch gekennzeichnet, dass** eine Ausgabeöffnung (12) in dem Deckel (10) der Tülle (6) benachbart bereitgestellt ist, wenn der Deckel (10) an dem Becher angebracht ist, wobei der Deckel (10) einen lösbaren Verschluss (14) einbezieht, der dazu angepasst ist, die Ausgabeöffnung (12) zu verschließen, wenn er sich in einer geschlossenen Konfiguration befindet, wobei der Verschluss (14) einen Abschnitt (16) umfasst, der dazu angepasst ist, die Tülle (6) zu überlagern, wenn der Deckel (10) an dem Becher (2) angebracht ist und sich der Verschluss (14) in seiner geschlossenen Konfiguration befindet.

2. Behälter nach Anspruch 1, wobei der Verschluss (14) mit dem Deckel (10) einstückig ausgebildet ist.

3. Behälter nach Anspruch 2, wobei mindestens eine Reißführung (18, 20) in dem Deckel (10) an dem Übergang zwischen dem Verschluss (14) und der Ausgabeöffnung (12) gebildet ist, wobei der Verschluss (14) durch Reißen entlang der mindestens einen Reißführung (18, 20) mindestens teilweise von dem Deckel (2) getrennt werden kann, um die Ausgabeöffnung (12) zu öffnen und den Verschluss (14) zu lösen.

4. Behälter nach Anspruch 3, wobei die mindestens eine Reißführung (18, 20) einen Abschnitt des Deckels mit verringerter Dicke umfasst.

5. Behälter nach Anspruch 3 oder Anspruch 4, wobei die mindestens eine Reißführung einen ersten und einen zweiten Reißführungsabschnitt (18, 20) umfasst, die jeweilige Seiten der Ausgabeöffnung (12) definieren und sich von jeweiligen Enden eines Scharnierabschnitts (22) an einem mittigen Bereich des Deckels (10) oder diesem benachbart in Richtung des Rands (4) des Bechers (2) erstrecken.

6. Behälter nach Anspruch 5, wobei der erste und der zweite Reißführungsabschnitt (18, 20) in Richtung einer äußeren Kante des Deckels (10) auseinanderlaufen und auf beiden Seiten der Tülle (6) des Bechers (2) enden, wenn der Deckel (10) an dem Becher (2) angebracht ist.

7. Behälter nach einem der Ansprüche 3 bis 6, wobei der Verschluss (14) dazu angepasst ist, die Ausgabeöffnung (12) des Deckels (10) vor dem Trennen des Verschlusses (14) von dem Deckel (10) entlang der mindestens einen Reißführung (18, 20) zu versiegeln.

8. Behälter nach einem der vorangehenden Ansprüche, wobei der Abschnitt (16) des Deckels (10), der dazu angepasst ist, die Tülle (6) des Bechers (2) zu überlagern, wenn der Deckel (10) an dem Becher (2) angebracht ist, einen Abdeckabschnitt (16) des Verschlusses (14) umfasst, der dazu angepasst ist, über die Tülle (6) des Bechers (2) zu passen, wenn er sich in seiner geschlossenen Konfiguration befindet.

9. Behälter nach Anspruch 8, wenn abhängig von Anspruch 5 oder Anspruch 6,
wobei sich der Abdeckabschnitt (16) an einem äußeren Ende der ersten und der zweiten Reißführung (18, 20) befindet.

10. Behälter nach Anspruch 8 oder Anspruch 9, wobei der Abdeckabschnitt (16) des Verschlusses (14) und die Tülle (6) des Bechers (2) zusammenwirkende Riegelelemente umfassen, die dazu angepasst sind, vor dem ersten Gebrauch den Abdeckabschnitt (16) des Verschlusses (14) über der Tülle (6) zu fixieren, und das anschließende Wiederverschließen des Verschlusses (14) zu ermöglichen, sodass der Verschluss (14) wiederverwendbar ist.

11. Behälter nach Anspruch 10, wobei die zusammenwirkenden Riegelelemente Folgendes umfassen: mindestens einen Vorsprung oder Widerhaken (24) an einem von dem Abdeckabschnitt (14) und der Tülle (6) und mindestens eine zusammenwirkende Aussparung (26) an dem anderen von dem Abdeckabschnitt (14) und der Tülle (6), die dazu angepasst ist, den Vorsprung oder den Widerhaken (24) aufzunehmen, wenn sich der Verschluss (14) in seiner geschlossenen Konfiguration befindet.

12. Behälter nach einem der Ansprüche 8 bis 11, wobei der Deckel (10) eine Aussparung (28) umfasst, die dazu angepasst ist, den Abdeckabschnitt (16) aufzunehmen, um dadurch den Verschluss (14) in seiner offenen Konfiguration zu halten.

13. Behälter nach Anspruch 12, wobei die Aussparung (28) dazu angepasst ist, eine Spitze des Abdeckabschnitts (16) des Verschlusses (14) aufzunehmen.

14. Behälter nach einem der vorangehenden Ansprüche, wobei der Deckel (10) der Ausgabeöffnung (12) benachbarte nach oben ragende Führungswände (36, 38) umfasst, die dazu angepasst sind, ein Auslaufen auf beiden Seiten der Tülle (6) zu verhindern.

15. Behälter nach einem der vorangehenden Ansprüche, wobei die Tülle (6) einen Krümmungsradius aufweist, der geringer als der Krümmungsradius des Rests des Rands (4) des Bechers (2) ist.

## Revendications

1. Récipient pour produit alimentaire visqueux comportant un gobelet (2) ayant un rebord (4), une partie dudit rebord (4) définissant un bec (6) s'étendant vers le haut pour faciliter la consommation dudit produit alimentaire visqueux en provenance du gobelet (2) par le biais dudit bec (6), un couvercle (10) adapté pour être monté sur le rebord (4) du gobelet (2) pour fermer le gobelet (2), **caractérisé en ce qu'**une ouverture de distribution (12) est mise en oeuvre dans ledit couvercle (10) de manière adjacente par rapport au bec (6) quand le couvercle (10) est fixé sur le gobelet (2), le couvercle (10) incorporant un dispositif de fermeture libérable (14) adapté pour fermer l'ouverture de distribution (12) dans la configuration fermée, dans lequel ledit dispositif de fermeture (14) comprend une partie (16) adaptée pour recouvrir le bec (6) quand le couvercle (10) est fixé sur le gobelet (2) et quand le dispositif de fermeture (14) se trouve dans sa configuration fermée.

2. Récipient selon la revendication 1, dans lequel le dispositif de fermeture (14) est formé d'un seul tenant avec le couvercle (10).

3. Récipient selon la revendication 2, dans lequel au moins un dispositif de guidage à déchirer (18, 20) est formé dans le couvercle (10) au niveau de l'interface entre le dispositif de fermeture (14) et l'ouverture de distribution (12), dans lequel le dispositif de fermeture (14) peut être séparé au moins partiellement du couvercle (2) par déchirure le long dudit au moins un dispositif de guidage à déchirer (18, 20) afin d'ouvrir ladite ouverture de distribution (12) et de libérer le dispositif de fermeture (14).

4. Récipient selon la revendication 3, dans lequel ledit au moins un dispositif de guidage à déchirer (18, 20) comporte une partie à épaisseur réduite du couvercle.

5. Récipient selon la revendication 3 ou la revendication 4, dans lequel ledit au moins un dispositif de guidage à déchirer comporte des première et deuxième parties de dispositif de guidage à déchirer (18, 20) définissant des côtés respectifs de l'ouverture de distribution (12) et s'étendant depuis des extrémités respectives d'une partie formant charnière (22) au niveau d'une, ou de manière adjacente par rapport à une, région centrale du couvercle (10) vers le bord (4) du gobelet (2).

6. Récipient selon la revendication 5, dans lequel lesdites première et deuxième parties de dispositif de guidage à déchirer (18, 20) divergent l'une de l'autre vers un bord extérieur du couvercle (10) et se terminent de chaque côté du bec (6) du gobelet (2) quand le couvercle (10) est fixé sur le gobelet (2).

7. Récipient selon l'une quelconque des revendications 3 à 6, dans lequel ledit dispositif de fermeture (14) est adapté pour sceller l'ouverture de distribution (12) du couvercle (10) avant la séparation du dispositif de fermeture (14) du couvercle (10) le long dudit au moins un dispositif de guidage à déchirer (18, 20).

8. Récipient selon l'une quelconque des revendications précédentes, dans lequel ladite partie (16) du couvercle (10) adaptée pour recouvrir le bec (6) du gobelet (2) quand le couvercle (10) est fixé sur le gobelet (2) comporte une partie de recouvrement (16) dudit dispositif de fermeture (14) adaptée pour être placée sur ledit bec (6) du gobelet (2) dans sa configuration fermée.

9. Récipient selon la revendication 8, quand dépendante de la revendication 5 ou de la revendication 6, dans lequel ladite partie de recouvrement (16) est située à une extrémité extérieure desdits premier et deuxième dispositifs de guidage à déchirer (18, 20).

10. Récipient selon la revendication 8 ou la revendication 9, dans lequel ladite partie de recouvrement (16) dudit dispositif de fermeture (14) et ledit bec (6) du gobelet (2) comprennent des éléments de verrouillage coopérants adaptés pour assujettir ladite partie de recouvrement (16) dudit dispositif de fermeture (14) sur ledit bec (6), avant toute utilisation initiale et pour permettre la refermeture ultérieure dudit dispositif de fermeture (14) de telle sorte que ledit dispositif de fermeture (14) est en mesure d'être réutilisé.

11. Récipient selon la revendication 10, dans lequel lesdits éléments de verrouillage coopérants comportent au moins une partie faisant saillie ou barbelure (24) sur l'un parmi la partie de recouvrement (14) et le bec (6) et au moins un évidement coopérant (26) sur l'autre parmi la partie de recouvrement (14) et le bec (6) adapté pour recevoir ladite partie faisant saillie ou barbelure (24) quand ledit dispositif de fermeture (14) est dans sa configuration fermée.

12. Récipient selon l'une quelconque des revendications 8 à 11, dans lequel ledit couvercle (10) comprend un évidement (28) adapté pour recevoir ladite partie de recouvrement (16) pour de ce fait retenir le dispositif de fermeture (14) dans sa configuration ouverte.

13. Récipient selon la revendication 12, dans lequel ledit évidement (28) est adapté pour recevoir un bout de ladite partie de recouvrement (16) dudit dispositif de fermeture (14).

14. Récipient selon l'une quelconque des revendications précédentes, dans lequel ledit couvercle (10) incorpore des parois de guidage faisant saillie vers le haut (36, 38) adjacentes par rapport à l'ouverture de distribution (12) adaptées pour empêcher tout déversement de chaque côté dudit bec (6).

15. Récipient selon l'une quelconque des revendications précédentes, dans lequel le bec (6) a un rayon de courbure inférieur au rayon du reste du rebord (4) du gobelet (2).
